# EUROPEAN PATENT SPECIFICATION

(11) **EP 2 602 141 B1**
(45) Date of publication and mention of the grant of the patent: **02.07.2014**
(21) Application number: 11290568.2
(22) Date of filing: 07.12.2011
(51) Int. Cl.: B60K 1/04

(54) **Interface between an expansion device and wall**
Schnittstelle zwischen einer Expansionsvorrichtung und einer Wand
Interface entre un dispositif d'expansion et une paroi

(43) Date of publication of application: 12.06.2013
(73) Proprietor: Valeo Systèmes Thermiques, 78321 Le Mesnil Saint Denis (FR)
(72) Inventor: Almori, Armelle, 78310 Maurepas (FR); Guigou, Pascal, 92260 Fontenay aux Roses (FR); Shichiken, Yutaka, Kumagaya-shi saitama 360-0193 (JP); Yoshizaki, Hisayoshi, Kumagaya-shi saitama 360-0193 (JP)
(74) Representative: Vieillevigne, Sébastien Nicolas Bernard

(56) References cited:
- WO-A1-2007/131355
- US-A- 5 622 051
- US-A1- 2002 035 973

## Description

The technical scope of the present invention is related to thermal conditioning installations for batteries that can power hybrid vehicles or fully electric vehicles. The invention covers especially an intermediate means between tubes that supply refrigerant fluid and an expansion device that is part of a refrigerant circuit.

The depletion of oil resources led car manufacturers to develop vehicles that operate from alternative energy sources. The propulsion of the vehicle via electrical power is a solution that represents an attractive alternative and it is necessary to embed batteries to store electrical energy and provide it to an electric motor which propels the vehicle.

The lifetime of these batteries depends on the temperature of said batteries. In particular, it is known that the charging and discharging of these batteries involve heat release that should be compensated to improve the reliability of these batteries. This life is further enhanced when the temperature difference between the lowest value of temperature and the highest value of temperature is as small as possible.

Regarding the implementation of these batteries in a motor vehicle, it is known to assemble a plurality of batteries in an internal volume of a closed enclosure, said closed enclosure being reported on the vehicle body. This is called a battery pack and it is thermally conditioned by providing a flow of a thermally treated air, that is to say, heated or cooled. In the case of cooling, it is provided by an evaporator crossed by the refrigerant, and by the flow of air to be treated.

When the evaporator and the expansion device are arranged within the volume defined by the enclosure, it should be provided a way to connect the expansion device, located inside the enclosure, to the tubes carrying the refrigerant fluid that are located outside the enclosure. In addition, the proximity of the evaporator and the walls of the enclosure may be liable to hinder the positioning of the expansion device, and the tubes carrying the refrigerant fluid inside the enclosure to the expansion device are given a very complex angled form. Therefore, it is necessary for each closed enclosure to give a specified form to the carrying tubes inside the enclosure, which prevents any reproducibility of the conception of the tubes for several closed enclosures and may pose problems of refrigerant fluid leakage due to the complex form of the tubes. These aspects are the technical problems that the invention proposes to solve.

An interface according to the preamble of claim 1 is known from WO 2007/131355.

The aim of the present invention is therefore to overcome the disadvantages described above.

The invention thus provides an interface to be installed between an expansion device of a refrigerant fluid and a wall, that includes at least one conduit able to channel the refrigerant fluid, a first docking device adapted to receive the expansion device and extending essentially in a first plane, a second docking device adapted to cooperate with the wall and extending essentially in a second plane, wherein the first plane and the second plane are inclined with respect to each other according to a non zero angle.

Thanks to said non zero angle, the interface according to the present invention, being an intermediate flange, is able to properly linked the enclosure and its surrounding. In particular, the non zero angle makes it possible to use tubes carrying the refrigerant fluid of a simple form and accordingly avoids any leakage problems. The non zero angle makes also the interface adapted to any configuration given that it is just needed to change the value of said angle.

The interface is also able to contain the refrigerant fluid, to provide a seal between the environment surrounding the enclosure and the internal volume of said enclosure, and interfacing a tube axis with an axis of the expansion device.

According to another embodiment of the invention, the interface further comprises a body including at least one face, said at least one face forming the second docking device of the interface.

According to another embodiment of the invention, the interface further comprises a receiving means of a sealing device arranged on the second docking device.

According to another embodiment of the invention, the receiving means is a groove formed in the second plane.

According to another embodiment of the invention, the interface further comprises a sleeve in contact with the body.

According to another embodiment of the invention, the sleeve defines the at least one conduit.

According to another embodiment of the invention, the interface further comprises a shoulder including at least one face, the first docking device being formed by a face of the shoulder.

According to another embodiment of the invention, the shoulder rests in contact with the second docking device.

According to another embodiment of the invention, the non zero angle is an acute angle.

According to another embodiment of the invention, the interface further comprises means for retaining at least one electrical connector.

According to another embodiment of the invention, the interface is monolithic.

According to another embodiment of the invention, the interface is made of an aluminium alloy or made of plastic material.

The invention also concerns a ventilation and cooling installation comprising a housing which houses at least one blower unit and an evaporator, said installation comprising an expansion device connected to the evaporator, characterized in that it includes an interface as preceding between said expansion device and an environment surrounding said ventilation and cooling installation.

The invention also concerns a thermal conditioning device of at least one battery, comprising a ventilation and cooling installation as preceding and at least one battery.

A first advantage of the invention lies in a mounting flexibility offered by the interface of the invention. Indeed, this interface is adaptable in the sense that the non zero angle allows to use simple form of refrigerant fluid carrying tubes and is used to correct the defect of parallelism between the axis of internal ducts of said expansion device and the axis of tubes that carry refrigerant installed outside the enclosure containing batteries.

Another advantage is the reliability of the seal made by the interface between the internal volume of the enclosure and the surrounding environment of said enclosure.

Another significant advantage is the fact that the object of the invention meets at least three functions, namely the interfacing between the tubes carrying refrigerant fluid and expansion device, sealing against the wall of the enclosure and the correction of misalignment between the expansion device and the transporting tubes.

Other features, details and advantages of the invention appear more clearly upon reading the description for guidance given below in connection with the drawings in which:
- Figure 1 is a view of a thermal conditioning device with at least one battery comprising an interface according to the present invention,
- Figure 2 is a perspective view of the interface of Figure 1,
- Figure 3 is a perspective view showing in particular a first side of the interface of Figure 2, and
- Figure 4 is a perspective view showing a second side of the interface of Figure 3.

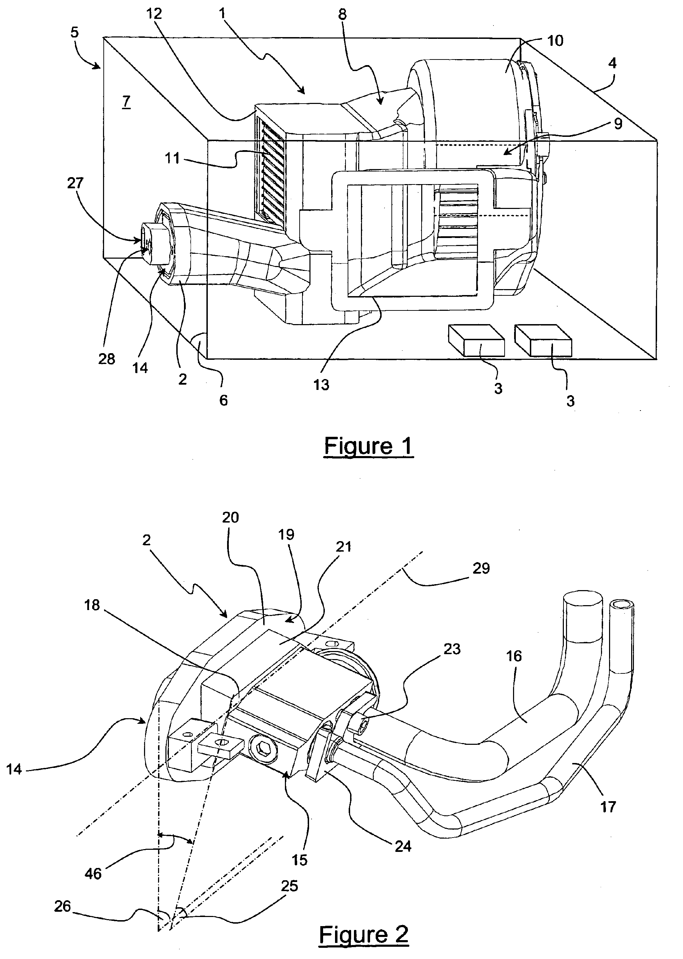

Figure 1 illustrates a thermal conditioning device within which there is a ventilation and cooling installation 1. The ventilation and cooling installation 1 is part of a thermal conditioning device 4 of at least one battery 3, whose function is to provide sufficient electrical power to propel an automotive vehicle. Figure 1 shows two batteries but it is obvious that the thermal conditioning device may comprise more than two batteries.

The thermal conditioning device 4 comprises an expansion device 15 and an interface 2 for connecting said expansion device 15 to the outside of the thermal conditioning device 4.

As can be seen from Figure 1, the thermal conditioning device 4 comprises an enclosure 5 comprising an internal volume 7 delimited by at least one wall 6. The thermal conditioning device 4 is adapted to heat or cool the internal volume 7, and correspondingly to heat or cool the battery or batteries housed in the internal volume 7.

The ventilation and cooling installation 1 comprises a housing 8 which houses the components involved in the thermal conditioning of the internal volume 7. Among these components, there is a blower unit 9 mounted in a volute casing 10. The installation 1 also includes a portion that receives an evaporator 11, the evaporator 11 being the component that cools a flow of air contained in the internal volume 7. The evaporator 11 is connected to a refrigerant circuit, also called refrigerant loop, which implements a thermodynamic cycle, known per se. The evaporator 11 is thus crossed by the refrigerant fluid which, via the evaporator, picks up heat energy from the airflow.

Optionally, the housing 8 accommodates a heater (not shown) whose function is to provide heat to the air stream. Activation of the cooling or heating of the air flow circulating in a closed loop in the internal volume 7 is placed under the control of a means of regulating not detailed here.

The housing 8 includes an air intake vent 12 and an outlet vent 13 of the air thermally treated by the evaporator 11 and / or the heater.

As can be seen from Figure 1, the housing 8 advantageously extends till the interface 2 by covering the expansion device and the pipelines installed between said expansion device and the evaporator 11.

As can be seen more particularly from Figures 2 to 4, the interface 2 includes a docking device 14, hereinafter called second docking device 14 and a first docking device 18.

The second docking device 14 is able to be pressed against the wall 6, so that the second docking device 14 connects the thermal conditioning device 4 to the outside of the enclosure 5. The first docking device 18 is arranged so that the expansion device is able to rest against the first docking device 18.

The interface 2 also includes a first conduit 27 and a second conduit 28 that channel the refrigerant fluid from the expansion device 15. The first conduit 27 and the second conduit 28 have advantageously a circular cross section and extend along parallel axes. The first and second conduits 27 and 28 are each formed by a recess made in the interface 2. Advantageously, pipelines 16 and 17 connect the expansion device 15 to the evaporator.

The interface 2 comprises a body 19 whose outer general shape is oval. The body 19 comprises two opposite faces referenced 20 and 14, that is the body 19 is bounded by the faces 20 and 14. The face 14 forms the second docking device 14 of the thermal conditioning device 4. The face 20 is arranged so that a shoulder 21 extends out of the face 20, said shoulder 21 having a generally rectangular outer shape. The shoulder 21 has a free side opposite to the body 19 relative to the shoulder. The free face of the shoulder 21 forms the first docking device 18.

The expansion device 15 comprises a wall that is pressed against the face of the shoulder 21, and is held mechanically on the interface 2, for example, by at least one screw 23 engaged in a first attachment means, not visible in this figure. The screw 23 also passes through a flange 24 which secures the ends of pipelines 16 and 17 in the expansion device 15. It is thus understood that the expansion device 15 is sandwiched between the flange 24 and the interface 2 and one or more screws 23 provide, on one hand, the fixation of pipelines 16, 17 vis-à-vis the expansion device, and on the other hand, the fixation of the expansion device 15 against the first docking device 18.

Opposite to the shoulder 21, the body 19 of the interface is defined by a face which forms an embodiment of the second docking device 14, as already described.

The first docking device 18 that is formed by the free face of the shoulder 21 is advantageously flat and extends essentially in a first plane referenced 25. The second docking device 14 formed by the face 14 of the body 19 is also advantageously flat and essentially extends in a second plane referenced 26. The first docking device 18 and the second docking device 14 are arranged so that the planes 25 and 26 in which the docking devices 18 and 14 respectively extend form a non zero angle 46. In other words, the free face of the shoulder 21 is not parallel to the face of the body 19 forming the second docking device 14. The non zero angle 46 is advantageously an acute angle. Preferably, the value of the angle is inferior to 45°.
As can be seen from Figure 2, the planes 25 and 26 intersect on a line that is parallel to a line 29 passing along the respective centres of the sections of the conduits 27 and 28.

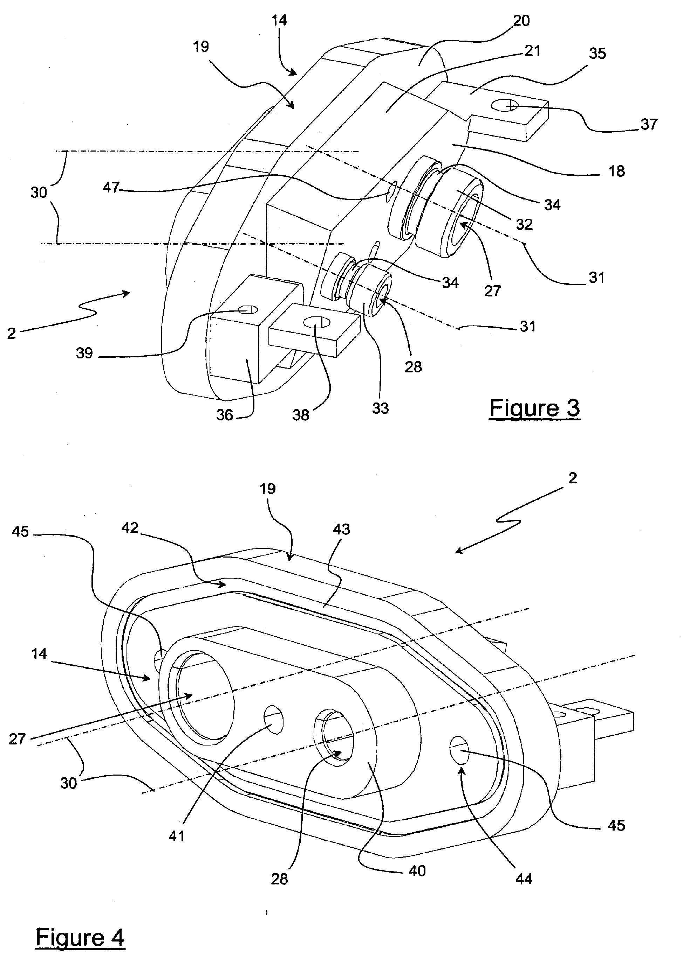

As can be seen from Figure 4, the second docking device 14 also includes a receiving means 42 of a sealing device to provide a seal between the wall 6 and the interface, to prevent air or refrigerant circulation between the internal volume 7 of the thermal conditioning device 4 and the environment that surrounds the thermal conditioning device 4.
In the illustrated embodiment, the receiving means 42 is in the form of a groove 43 formed in the body 19, at the face which forms the second docking device 14 so as to accommodate a sealing device (not shown), which may take the form of an O-ring. Alternatively, such a sealing device can also be formed by overmoulding the body 19, especially when molding or/and making it.

The body 19 also includes a securing element 44 on the wall of the thermal conditioning device. For example, the securing element takes the form of two holes 45, eventually treaded, to facilitate the attachment of the interface 2 from outside the thermal conditioning device.

As can be seen from the Figures, the first conduit 27 and the second conduit 28 go through the interface 2 from one side to the other, leading out on one side at the first docking device 18 and the other side at the second docking device 14.

As can be seen from Figure 3, the first and second conduits 27 and 28 have each a first portion extending along a first axis 30, said axis being for example straight, and in a second portion, adjacent to the first portion, along a second axis 31, said second axis being also for example straight. The first axis 30 and the second axis 31 are inclined with respect to each other in a non zero angle.

The interface 2 comprises at least a first pipe 32 and a second pipe 33 which each extends beyond the first docking device 18, in particular out of the free face of the shoulder 21. These pipes 32 and 33 have an outer wall of circular shape, which is carrying on a groove 34 for receiving an O-ring. The expansion device has two cavities in which the pipes 32 and 33 are housed, so that said O-ring seals the interface and the expansion device.
Alternatively, such sealing can be over moulded on the body 19.

As can be seen more particularly on Figure 4, the interface 2 comprises a sleeve 40 which is derived from the face of the body 19 and extends from the face 1 forming the second docking device 14. The sleeve 40 generally extends along a direction that is parallel to the first axis 30. The sleeve 40 helps to centre the interface 2 with respect to a hole that is made across the wall of the thermal conditioning device 4. The sleeve 40 also defines a part of the first conduit 27 and the second conduit 28 as the conduits 27 and 28 extend into the thickness of the sleeve 40.

The sleeve 40 also includes a first attachment means 41 for attaching the tube / tubes carrying refrigerant fluid coming from the refrigerant circuit, these tubes being outside the walls defining the thermal conditioning device. In this case, the first attachment means 41 takes the form of a treaded hole made in the sleeve 40.

The first face 20 of the body 19 also includes a first protrusion 35 and a second protrusion 36 located on both sides of the shoulder 21 along the line that crosses the centre of the first conduit 27 and the second conduit 28. The protrusions 35 and 36 have a rectangular section and extend out of the first face 20 in a direction parallel to the first axis 30.

The protrusions 35, 36 include a through hole 37, 38 for receiving a screw in order for the interface to be held to a main housing. Another hole 39 serves for electricity harness on a sub-assembly.

The shoulder 21 also includes a second attachment means 47 able to fasten the expansion device 15 on the interface 2. The second attachment means 47 is, for example, in the form of one or more threaded holes formed in the thickness of the shoulder 21.

On the embodiment illustrated on Figure 2, the expansion device 15 is a thermostatic expansion valve and includes a body out of which a thermostatic capsule extends, whose function is to control the refrigerant flow entering the evaporator, upon command according to the temperature of said refrigerant fluid at the outlet of the evaporator.

The interface 2 is advantageously formed by a monolithic piece. Preferably, the interface 2 is made of an aluminium alloy. According to another embodiment of the invention, this piece can be moulded from plastic material.

According to an improvement of the invention, the interface includes two other functions in connection with the passage of a component from outside the thermal conditioning device to the internal volume of it. Alternatively, the interface includes means for retaining one or more electrical connectors. These connectors may be used to power the blower unit. These connectors can also provide the electrical energy stored in the batteries. This is particularly advantageous because it is not necessary to make an extra hole for the passage of electric cables, and making them airtight.

According to another complementary or alternative embodiment, the interface forms a support for a pressure relief valve. Such a valve forms a safety device that prevents the pressure in the internal volume to exceed a certain threshold.

Finally, such an interface 2 according to the invention can gather several functions such as mechanical interfacing, sealing between the internal volume and the environment that surrounds the wall, circulation of refrigerant fluid, correction angle between the tubes that transport the refrigerant fluid and the expansion device, support for electrical connector and support for pressure relief valve.

In the illustrated embodiments, the interface 2 according to the present invention comprises two conduits 27 and 28, but the scope of the invention is not limited to such a number and the interface 2 can comprise only one conduit or on the contrary more than two conduits.

## Claims

1. Interface (2) to be installed between an expansion device (15) of a refrigerant fluid and a wall (6), that includes at least one conduit (27) able to channel the refrigerant fluid, a first docking device (18) adapted to receive the expansion device (15) and extending essentially in a first plane (25), a second docking device (14) adapted to cooperate with the wall (6) and extending essentially in a second plane (26), **characterized in that** the first plane (25) and the second plane (26) are inclined with respect to each other according to a non zero angle (46).

2. Interface according to claim 1, further comprising a body (19) including at least one face (14, 20), said at least one face (14) forming the second docking device (14) of the interface (2).

3. Interface according to claim 1 or 2, further comprising a receiving means (42) of a sealing device arranged on the second docking device (14).

4. Interface according to claim 3, wherein the receiving means (42) is a groove (43) formed in the second plane (26).

5. Interface according any of the preceding claims, further comprising a sleeve (40) in contact with the body (19).

6. Interface according claim 5, wherein the sleeve (40) defines the at least one conduit (27).

7. Interface according to any of the preceding claims, comprising a shoulder (21) including at least one face (18), the first docking device (18) being formed by a face of the shoulder (21).

8. Interface according to claim 7, wherein the shoulder (21) rests in contact with the second docking device (14).

9. Interface according to any of the preceding claims, wherein the non zero angle (46) is an acute angle.

10. Interface according to any of the preceding claims, wherein the interface (2) is monolithic.

11. Interface according to any of the preceding claims, wherein the interface (2) is made of an aluminium alloy or made of plastic material.

12. Interface according to any of the preceding claims, further comprising means for retaining at least one electrical connector.

13. Ventilation and cooling installation (1) comprising a housing (8) which houses at least one blower unit (9) and an evaporator (11), said installation comprising an expansion device (15) connected to the evaporator (11), **characterized in that** it includes an interface (2) according to any of the preceding claims between said expansion device (15) and an environment surrounding said ventilation and cooling installation (1).

14. Thermal conditioning device (4) of at least one battery, comprising a ventilation and cooling installation (1) according to claim 13 and at least one battery (3).

## Patentansprüche

1. Schnittstelle (2), die zwischen einer Expansionsvorrichtung (15) einer Kühlmittelflüssigkeit und einer Wand (6) zu installierten ist, die mindestens eine Leitung (27), die die Kühlmittelflüssigkeit leiten kann, eine erste Andockvorrichtung (18), die geeignet ist, die Expansionsvorrichtung (15) aufzunehmen und sich im Wesentlichen in einer ersten Ebene (25) erstreckt, eine zweite Andockvorrichtung (14), die geeignet ist, mit der Wand (6) zusammenwirken und sich im Wesentlichen in einer zweiten Ebene (26) erstreckt, aufweist, **dadurch gekennzeichnet, dass** die erste Ebene (25) und die zweite Ebene (26) in einem Winkel, der ungleich Null ist (46), zueinander geneigt sind.

2. Schnittstelle nach Anspruch 1, die ferner einen Körper (19) aufweist, der mindestens eine Fläche (14, 20) aufweist, wobei mindestens eine Fläche (14) die zweite Andockvorrichtung (14) der Schnittstelle (2) bildet.

3. Schnittstelle nach Anspruch 1 oder 2, die ferner Aufnahmemittel (42) einer Dichtungsvorrichtung aufweist, die an der zweiten Andockvorrichtung (14) angeordnet sind.

4. Schnittstelle nach Anspruch 3, wobei die Aufnahmemittel (42) eine Nut (43) sind, die in der zweiten Ebene (26) gebildet ist.

5. Schnittstelle nach einem der vorhergehenden Ansprüche, die ferner eine Hülse (40) in Kontakt mit dem Körper (19) aufweist.

6. Schnittstelle nach Anspruch 5, wobei die Hülse (40) mindestens die eine Leitung (27) definiert.

7. Schnittstelle nach einem der vorhergehenden Ansprüche, die eine Schulter (21) aufweist, die mindestens eine Fläche (18) aufweist, wobei die erste Andockvorrichtung (18) von einer Fläche der Schulter (21) gebildet ist.

8. Schnittstelle nach Anspruch 7, wobei die Schulter (21) mit der zweiten Andockvorrichtung (14) in Kontakt bleibt.

9. Schnittstelle nach einem der vorhergehenden Ansprüche, wobei der Winkel, der ungleich Null ist (46), ein spitzer Winkel ist.

10. Schnittstelle nach einem der vorhergehenden Ansprüche, wobei die Schnittstelle (2) monolithisch ist.

11. Schnittstelle nach einem der vorhergehenden Ansprüche, wobei die Schnittstelle (2) aus einer Aluminiumlegierung oder aus Kunststoff erstellt ist.

12. Schnittstelle nach einem der vorhergehenden Ansprüche, die ferner Mittel zum Halten von mindestens einem elektrischen Anschluss aufweist.

13. Lüftungs- und Kühlanlage (1), die ein Gehäuse (8) aufweist, das mindestens eine Gebläseeinheit (9) und einen Verdampfer (11) aufnimmt, wobei die Anlage eine Expansionsvorrichtung (15) aufweist, die mit dem Verdampfer (11) verbunden ist, **dadurch gekennzeichnet, dass** sie eine Schnittstelle (2) nach einem der vorhergehenden Ansprüche zwischen der Expansionsvorrichtung (15) und einer Umgebung, die die Lüftungs- und Kühlanlage (1) umgibt, aufweist.

14. Thermische Konditionierungsvorrichtung (4) von mindestens einer Batterie, die eine Belüftungs- und Kühlanlage (1) nach Anspruch 13 und mindestens eine Batterie (3) aufweist.

## Revendications

1. Interface (2) à installer entre un dispositif d'expansion (15) d'un fluide réfrigérant et une paroi (6), comprenant au moins un conduit (27) capable de canaliser le fluide réfrigérant, un premier dispositif d'amarrage (18) qui est adapté pour recevoir le dispositif d'expansion (15) et qui s'étend essentiellement dans un premier plan (25), un deuxième dispositif d'amarrage (14) qui est adapté pour coopérer avec la paroi (6) et qui s'étend essentiellement dans un deuxième plan (26), **caractérisée en ce que** le premier plan (25) et le deuxième plan (26) sont inclinés l'un par rapport à l'autre selon un angle non nul (46).

2. Interface selon la revendication 1, comprenant en outre un corps (19) comprenant au moins une face (14, 20), ladite au moins une face (14) formant le deuxième dispositif d'amarrage (14) de l'interface (2).

3. Interface selon la revendication 1 ou 2, comprenant en outre un moyen de réception (42) d'un dispositif d'étanchéité qui est agencé sur le deuxième dispositif d'amarrage (14).

4. Interface selon la revendication 3, dans laquelle le moyen de réception (42) est une rainure (43) qui est formée dans le deuxième plan (26).

5. Interface selon l'une quelconque des revendications précédentes, comprenant en outre un manchon (40) qui est en contact avec le corps (19).

6. Interface selon la revendication 5, dans laquelle le manchon (40) définit ledit au moins un conduit (27).

7. Interface selon l'une quelconque des revendications précédentes, comprenant un épaulement (21) comprenant au moins une face (18), le premier dispositif d'amarrage (18) étant formé par une face de l'épaulement (21).

8. Interface selon la revendication 7, dans laquelle l'épaulement (21) repose en contact avec le deuxième dispositif d'amarrage (14).

9. Interface selon l'une quelconque des revendications précédentes, dans laquelle l'angle non nul (46) est un angle aigu.

10. Interface selon l'une quelconque des revendications précédentes, dans laquelle l'interface (2) est monolithique.

11. Interface selon l'une quelconque des revendications précédentes, dans laquelle l'interface (2) est constituée d'un alliage d'aluminium ou est constituée d'une matière plastique.

12. Interface selon l'une quelconque des revendications précédentes, comprenant en outre des moyens pour retenir au moins un connecteur électrique.

13. Installation de ventilation et de refroidissement (1) comprenant un boîtier (8) qui contient au moins une unité de soufflante (9) et un évaporateur (11), ladite installation comprenant un dispositif d'expansion (15) connecté à l'évaporateur (11), **caractérisée en ce qu'**elle comprend une interface (2) selon l'une quelconque des revendications précédentes entre ledit dispositif d'expansion (15) et un environnement qui entoure ladite installation de ventilation et de refroidissement (1).

14. Dispositif de conditionnement thermique (4) d'au moins une batterie, comprenant une installation de ventilation et de refroidissement (1) selon la revendication 13 et au moins une batterie (3).
